# EUROPEAN PATENT APPLICATION

(11) **EP 4 775 722 A1**
(43) Date of publication of application: **15.07.2026**
(21) Application number: 24942067.0
(22) Date of filing: 28.11.2024
(51) Int. Cl.: D03D 1/00, G01B 7/16

(54) **NONLINEAR RESISTIVE STRAIN SENSOR**

(71) Applicant: Ascend Technology Limited, Hong Kong 999077 (HK)
(72) Inventor: The designation of the inventor has not yet been filed
(74) Representative: Wang, Bo
(86) International application number: PCT/CN2024/135326
(87) International publication number: WO 2026/112897

(57) **Abstract**

The present disclosure mainly relates to a nonlinear resistance strain sensor. The nonlinear resistance strain sensor includes an elastic substrate and a plurality of conductive substances. The plurality of conductive substances are uniformly distributed on the elastic substrate. When the elastic substrate is pulled, the length thereof correspondingly increases, and the density of the plurality of conductive substances on the elastic substrate decreases, thereby changing the overall resistance thereof. **In** the above manner, the nonlinear resistance strain sensor of the present disclosure has nonlinear and high-sensitivity resistance strain performance.

## Description

### TECHNICAL FIELD

The present disclosure relates to the technical field of sensors, and in particular, to a nonlinear resistance strain sensor.

### BACKGROUND

Detecting human health characteristics (e.g., heart rate) through strain sensors has been widely applied. Currently, commonly used strain sensors are mostly linear strain sensors, while nonlinear resistance strain sensors are not common; but in certain specific scenarios, nonlinear resistance strain sensors have certain advantages:

The sensitivity of a nonlinear resistance strain sensor changes with a change in input magnitude; when the input magnitude is low, the sensitivity thereof is high, and the nonlinear resistance strain sensor is capable of more sensitively perceiving tiny strain changes, thereby detecting more subtle changes in physical quantities, which is very helpful for detecting subtle strains.

### SUMMARY

Embodiments of the present disclosure provide a nonlinear resistance strain sensor including an elastic substrate and a plurality of conductive substances, wherein the plurality of conductive substances are fixedly disposed on the elastic substrate. The nonlinear resistance strain sensor is configured to generate strain under an action of a tensile force. The nonlinear resistance strain sensor is configured such that, in a state in which no external force is applied, the plurality of conductive substances are capable of electrical conduction. The plurality of conductive substances are configured such that, when the nonlinear resistance strain sensor is stretched, a gap exists therebetween, a resistance value thereof is infinite resistance, and electrical conduction is prevented.

A beneficial effect of the present disclosure is: by disposing the plurality of conductive substances on the elastic substrate, the nonlinear resistance strain sensor can provide a nonlinear stress-resistance change, which better meets the usage requirements of human detection sensors.

### BRIEF DESCRIPTION OF THE DRAWINGS

To more clearly illustrate the technical solutions in the embodiments of the present disclosure, a brief description of the drawings required for describing the embodiments will be provided below. Obviously, the drawings in the following description are merely some embodiments of the present disclosure, and for those of ordinary skill in the art, other drawings may also be obtained based on these drawings without exerting creative labor.
FIG. 1 is a schematic structural diagram of a nonlinear resistance strain sensor according to some embodiments of the present disclosure.
FIG. 2 is a schematic structural diagram of a nonlinear resistance strain sensor according to some embodiments of the present disclosure.
FIG. 3 is a schematic structural diagram of a nonlinear resistance strain sensor according to some embodiments of the present disclosure.
FIG. 4 is a schematic cross-sectional structural diagram of the nonlinear resistance strain sensor in the embodiment of FIG. 3.
FIG. 5 is a schematic cross-sectional structural diagram of the nonlinear resistance strain sensor in the embodiment of FIG. 3.
FIG. 6 is a schematic structural diagram of a nonlinear resistance strain sensor according to some embodiments of the present disclosure.
FIG. 7 is a schematic structural diagram of a nonlinear resistance strain sensor according to some embodiments of the present disclosure.

### DETAILED DESCRIPTION

With reference to the accompanying drawings and embodiments, the present disclosure is described in further detail below. It is particularly pointed out that the following embodiments are merely intended to illustrate the present disclosure but not intended to limit the scope thereof. Similarly, the following embodiments are only partial embodiments rather than all embodiments of the present disclosure, and all other embodiments obtained by those of ordinary skill in the art without exerting creative labor fall within the protection scope of the present disclosure.

Reference to "embodiments" in the present disclosure means that specific features, structures, or characteristics described in connection with the embodiments may be included in at least one embodiment of the present disclosure. It is explicitly and implicitly understood by those skilled in the art that the embodiments described in the present disclosure may be combined with other embodiments.

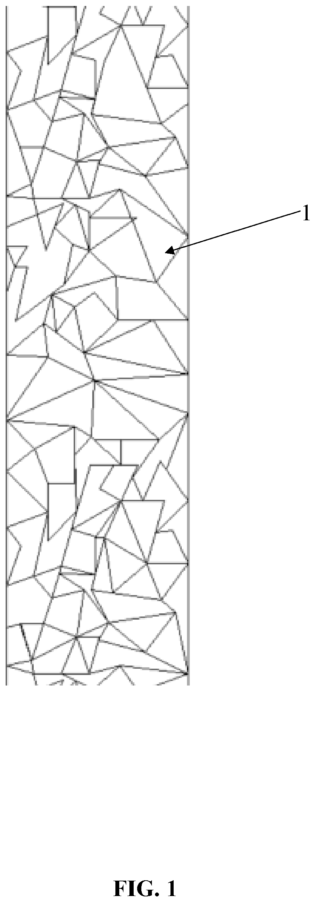

With reference to FIGs. 1, 2, and 3, embodiments of the present disclosure provide a nonlinear resistance strain sensor (hereinafter referred to as the sensor). The nonlinear resistance strain sensor includes an elastic substrate 4 and a plurality of conductive substances, and the plurality of conductive substances are distributed on the elastic substrate 4. When the elastic substrate 4 is not pulled, it has a shorter length, and the plurality of conductive substances have a high distribution density on the elastic substrate 4 and contact each other; in this situation, the sensor may be regarded as a conducting wire. When the elastic substrate 4 is pulled, it has a longer length, the distribution density per unit length of the plurality of conductive substances on the elastic substrate 4 decreases, the contact between the plurality of conductive substances deteriorates, and the resistance thereof gradually increases. Under further pulling, the density becomes so low that a gap exists therebetween, and the sensor is non-conductive at this time.

During the entire process, a slope in a strain-resistance relationship graph of the sensor shows a trend of gradual increase until the resistance thereof becomes infinite resistance.

In some embodiments, the elastic substrate 4 in the sensor may be made of elastic materials such as natural latex, synthetic latex, rubber, nylon, Tetoron, PP polypropylene, acrylic, cotton, polyester, spandex, etc. The elastic materials enable the sensor to be stretched under force and generate deformation.

In some embodiments, as shown in FIG. 1, the plurality of conductive substances may be fragmented conductive substances 1 non-uniformly disposed on the elastic substrate 4. When the elastic substrate 4 is not stretched, the fragmented conductive substances 1 contact and overlap with each other, placing the entire sensor in a state of continuous electrical conduction. When the elastic substrate 4 is stretched, the mutual contact area of the fragmented conductive substances 1 decreases, and the resistance thereof gradually increases until the elastic substrate 4 is stretched to a degree that the fragmented conductive substances 1 can no longer contact each other, thereby causing the resistance to abruptly become infinite resistance.

The setting of such nonlinear sensitivity facilitates detecting more subtle changes in physical quantities. The resistance value thereof exhibits a large change after being stretched, eliminating the need to resolve the contradictory issues encountered during the use of linear sensors (mainly contradictions among the magnitude of the excitation source, power consumption current, voltage division impedance, and ADC precision), making circuit detection easier. Or in some cases, when the sensor is required to determine whether a certain strain critical value is exceeded, such a nonlinear sensor may also be more practical.

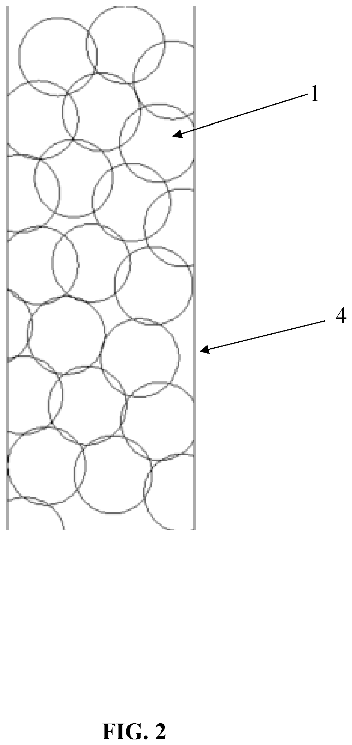

In other embodiments, as shown in FIG. 2, the elastic substrate 4 may be provided with a plurality of conductive particles 2, and the plurality of conductive particles 2 may be uniformly or randomly distributed on the elastic substrate 4. The density of the plurality of conductive particles 2 enables an electrical conduction when the elastic substrate 4 is not subjected to a force, and a non-conduction after being stretched for a certain distance, forming a nonlinear resistance change relationship.

In the embodiments, the plurality of conductive particles 2 may be adhered to the elastic substrate 4. The granular conductive substances are easier to prepare, which simplifies the manufacturing process and reduces the preparation cost. Moreover, directly fixing the granular conductive substances on the elastic substrate 4 by means of adhesion further simplifies the process; compared with sewing or other fixing methods, adhesion is obviously more convenient.

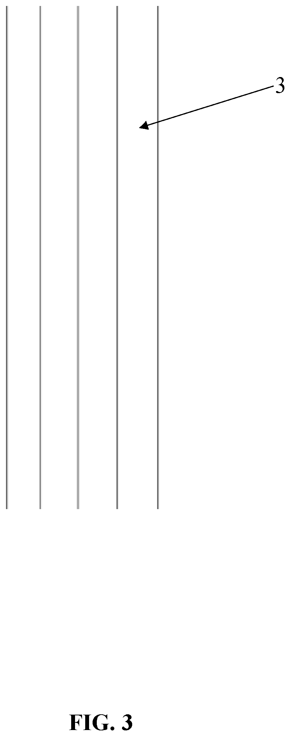

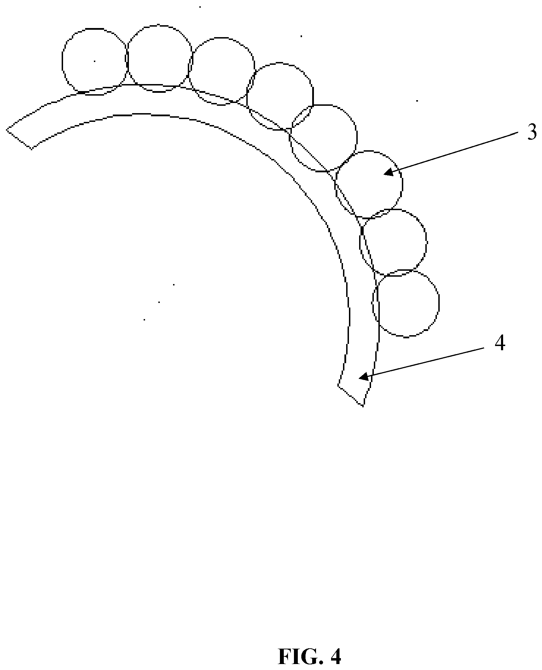

In some embodiments, as shown in FIGs. 3, 4, and 5, a plurality of conductive yarns 3 are woven around the elastic substrate 4. The plurality of conductive yarns 3 may surround the entire elastic substrate 4, or surround a portion of the elastic substrate 4 as shown in FIG. 4. Similarly, as the elastic substrate 4 is stretched, the plurality of conductive yarns 3 change from directly contacting each other (so that an electrical conduction can be formed between the entire sensor) to having a distance therebetween, so that the resistance of the sensor reaches infinite resistance at a certain moment. In this embodiment, the plurality of conductive yarns 3 may also be elastic, enabling them to deform along with the deformation of the elastic substrate 4; such a design allows the sensor to be more comfortably worn on a human body. The plurality of conductive yarns 3 may also be non-elastic; the non-elastic conductive yarns 3 can more accurately and sensitively reflect changes in stretching, thereby better measuring detection parameters.

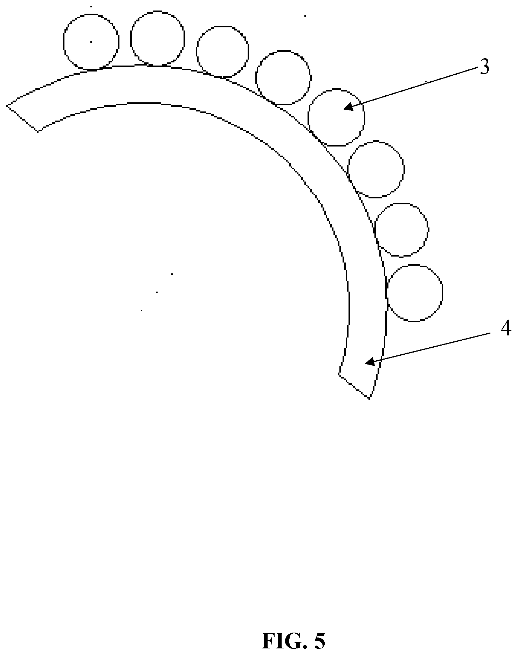

As shown in FIG. 4, in a state in which the sensor is not subjected to a tensile force, the plurality of conductive yarns 3 contact each other. As shown in FIG. 5, in a state in which the sensor is subjected to a tensile force, a distance among the plurality of conductive yarns 3 increases until they no longer contact each other, forming a state of infinite resistance.

In the above embodiments, the elastic substrate 4 may be formed by weaving elastic yarns. In some embodiments, both the elastic substrate 4 and the plurality of conductive yarns 3 are formed by weaving elastic yarns. Integrating the plurality of conductive yarns 3 into the elastic substrate 4 through an integrated weaving method makes the fixing relationship between the two tighter and more stable.

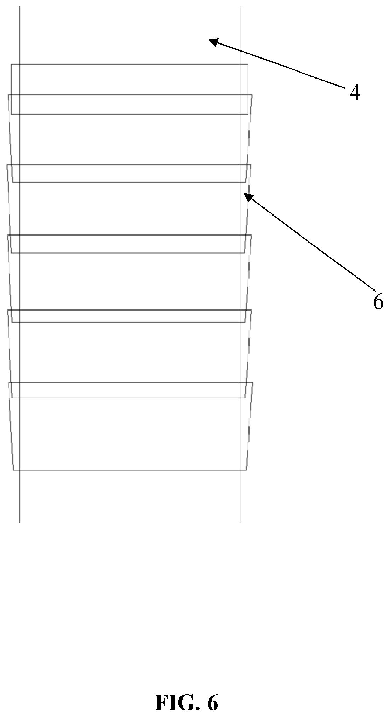

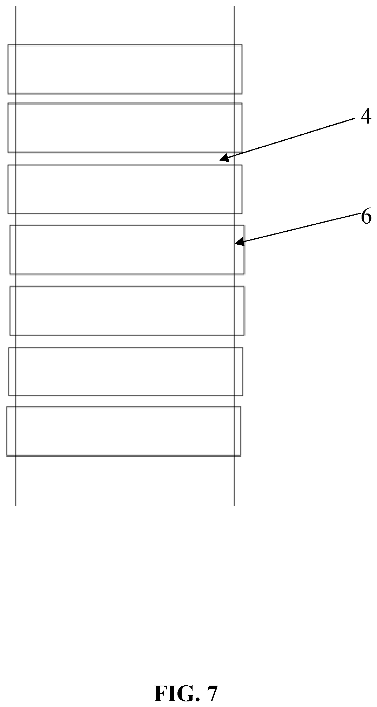

In some embodiments, as shown in FIGs. 6 and 7, a plurality of annular conductive sleeves 6 are disposed around the elastic substrate 4. The plurality of sequentially arranged conductive sleeves 6 directly have overlapping regions therebetween, and the overlapping regions can form electrical connections. During the stretching of the elastic substrate 4, the overlapping regions continuously shrink until no overlapping region exists among them, or even gaps exist, such that electrical connections cannot be formed, thereby forming a nonlinear stress-resistance relationship.

The plurality of conductive sleeves 6 can provide the elastic substrate 4 with a fixed-shape outer shell, exerting a protective effect on the elastic substrate 4 and extending the service life of the sensor.

The situation where the sensor forms infinite resistance during stretching needs to be adjusted within a controllable range. During use, to better control the sensor, the sensor should not be stretched too long; otherwise, the shape of the sensor changes significantly, making it difficult to predict the shape of the conductive substances fixed thereon. When the length is 50% of the original length, the shape is easy to predict, and setting the conductive substances to have infinite resistance at this time enables better use of the sensor.

The actual length change of the sensor in the field of respiratory detection is about 5%. To achieve maximum sensitivity, the non-conductive stretching threshold should be set near the stretching range in the application. For example, setting the non-conductive threshold for respiratory detection as 5% to 20% will make the sensor more sensitive in respiratory monitoring than the version with a 25% non-conductive threshold under the same conditions.

In the practical application of the sensor in a human respiration detection device, considering that users may have excessive stretching behaviors that may cause the sensor to fail to recover conductivity after being stretched beyond the expected length and then returned to its original length, this can be avoided through two manners:
1. By adding wires or structures that limit stretching to ensure that this part is not stretched beyond the threshold, a high-sensitivity stretching conductivity loss threshold such as 10% can be adopted.
2. Set a higher stretching conductivity loss threshold, such as 20% to 45%, sacrificing a certain degree of sensitivity to ensure stability.

An embodiment of Manner 1 may rely on the elasticity of the sensor fabric itself: the sensor fabric cannot be pulled further when stretched to 150% of the original length; alternatively, under the scenario where the user actively pulls the sensor, the tensile force generally does not exceed 8kg, and within 8kg, the length of the sensor does not exceed 150% of the original length.

Another embodiment of Manner 1 may involve weaving a non-elastic fabric into the human respiration detection device. The non-elastic fabric gradually transitions from a non-tightened state to a tightened state during stretching. For example, the non-elastic fabric is in a "Z" shape or "S" shape in the original state of the sensor and is gradually straightened during stretching to provide a length limitation for the sensor, ensuring that the sensor fabric cannot be pulled further when stretched to 150% of the original length. The original shape of the elastic fabric is not limited herein; the key is that the non-elastic fabric gradually transitions from a non-tightened state to a tightened state during stretching.

In the application of the human respiration detection device, the most common approach is to utilize changes in inductance, resistance, or capacitance caused by mechanical dimensional changes brought about by breathing.

Detecting human body signals through changes in resistance in the circuit is less susceptible to interference than through changes in capacitance, especially interference introduced by the human body; compared with inductance, it has a smaller volume and lower power consumption.

Detecting changes in resistance in the circuit often involves detecting a resistance of a conductor copper wire in the circuit. When the copper wire is stretched, the change in resistance is small, leading to extremely high requirements for detection accuracy, which is difficult to achieve.

Through an integrated weaving process, the plurality of conductive yarns 3 are woven into conductive channels for the resistance strain sensor. In some embodiments, the conductive yarns are formed by attaching conductive substances to non-conductive yarn materials. Electrical signals are transmitted among the yarns through contact, resulting in a significant impact on conductivity after being stretched. As the yarns are stretched, the contact among the conductive yarns deteriorates; since they are fabrics, the impedance does not suddenly disappear like rigid bodies, but the conductive substances gradually separate as the pressure decreases, causing a substantial increase in resistance.

In some embodiments, the human respiration detection device has a stretching limit during stretching by a user. A resistance value of the sensor in a stretching limit state and a resistance value of the sensor in an initial state have a first resistance value difference therebetween, and a length difference of the sensor between the two states is a first length difference. When the human respiration detection device is worn on a human body and the human body breathes normally, a difference in resistance value change of the sensor is a second resistance value difference, and a length difference of the sensor is a second length difference. A ratio of the first length difference to the second length difference is a first ratio, and a ratio of the first resistance value difference to the second resistance value difference is greater than 1.2 times the first ratio. To detect more detailed changes, this multiple may be set as 1.5 times, 2 times, 4 times, 10 times, or even 50 times.

For example, in the application of the sensor in a human respiration detection device, the sensor will not completely lose conductivity when the stretched length reaches 20% of the original length. In the initial state, the resistance value of the sensor is about 150 ohms; under normal breathing, the length fluctuates by 2% of the original length, and the resistance fluctuates by about 10 ohms. Under the extreme stretching of the sensor (stretched by 20%), the resistance value can change from about 150 ohms to about 350 ohms. In this embodiment, the ratio of the first length difference to the second length difference is 10, the ratio of the first resistance value difference to the second resistance value difference is 20, and the ratio of the first resistance value difference to the second resistance value difference is 2 times the first ratio.

The above are only partial embodiments of the present disclosure and are not intended to limit the protection scope thereof. All equivalent device or equivalent process transformations made using the contents of the specification and drawings of the present disclosure, or direct or indirect application in other related technical fields, are similarly included within the patent protection scope of the present disclosure.

## Claims

1. A nonlinear resistance strain sensor, comprising:
an elastic substrate; and
a plurality of conductive substances fixedly disposed on the elastic substrate, wherein
the nonlinear resistance strain sensor is configured to generate strain under an action of a tensile force;
the nonlinear resistance strain sensor is configured such that, in a state in which no external force is applied, the plurality of conductive substances are capable of electrical conduction; and
the plurality of conductive substances are configured such that, when the nonlinear resistance strain sensor is stretched, a gap exists therebetween, a resistance value is infinite resistance, and electrical conduction is prevented.

2. The nonlinear resistance strain sensor of claim 1, wherein
in a state in which the nonlinear resistance strain sensor is not subjected to a tensile force, adjacent conductive substances of the plurality of conductive substances contact each other; and
in a state in which the nonlinear resistance strain sensor is subjected to a stretching action, at least a portion of adjacent conductive substances of the plurality of conductive substances have a gap therebetween.

3. The nonlinear resistance strain sensor of claim 1 or 2, wherein
when the nonlinear resistance strain sensor is subjected to the stretching action and a stretched length thereof is 50% of an original length thereof, a resistance value of the nonlinear resistance strain sensor is infinite resistance.

4. The nonlinear resistance strain sensor of any one of claims 1-3,
wherein the conductive substance has an irregular fragment shape, and the plurality of conductive substances are randomly disposed on the elastic substrate.

5. The nonlinear resistance strain sensor of any one of claims 1-3,
wherein the conductive substance includes conductive particles, and the conductive particles are adhered to the elastic substrate.

6. The nonlinear resistance strain sensor of any one of claims 1-3,
wherein the conductive substance includes a conductive yarn, and the conductive yarn and the elastic substrate are formed by integrated weaving.

7. The nonlinear resistance strain sensor of any one of claims 1-3,
wherein the conductive fiber is elastic or non-elastic.

8. The nonlinear resistance strain sensor of any one of claims 1-3,
wherein the conductive substance includes a conductive sleeve, and an elastic fiber passes through the conductive sleeve in a surrounding manner.

9. A human respiration detection device, comprising the nonlinear resistance strain sensor of any one of claims 1-8.

10. The human respiration detection device of claim 9, wherein
when the nonlinear resistance strain sensor is subjected to the stretching action and a stretched length thereof is 5% to 20% of an original length thereof, a resistance value of the nonlinear resistance strain sensor is infinite resistance.

11. The human respiration detection device of claim 9, wherein
when the nonlinear resistance strain sensor is subjected to the stretching action and a stretched length thereof is 20% to 45% of an original length thereof, a resistance value of the nonlinear resistance strain sensor is infinite resistance.

12. The human respiration detection device of claim 9, wherein the human respiration detection device is woven with a non-elastic fabric, wherein
the non-elastic fabric is configured to gradually transition from a non-tightened state to a tightened state during a stretching process of the human respiration detection device, so as to provide a length limitation to the nonlinear resistance strain sensor.

13. The human respiration detection device of claim 12, wherein the non-elastic fabric is configured to limit a stretchable length of the nonlinear resistance strain sensor of the human respiration detection device to 50% of an original length thereof.

14. The human respiration detection device of claim 9, wherein the human respiration detection device has a stretching limit during a stretching process by a user, wherein
a resistance value of the nonlinear resistance strain sensor in a stretching limit state and a resistance value of the nonlinear resistance strain sensor in an initial state have a first resistance value difference therebetween, and a length difference of the nonlinear resistance strain sensor between the two states is a first length difference; and
when the human respiration detection device is worn on a human body and the human body breathes normally, a difference in resistance value change of the nonlinear resistance strain sensor is a second resistance value difference, and a length difference of the nonlinear resistance strain sensor is a second length difference, wherein a ratio of the first length difference to the second length difference is a first ratio, and a ratio of the first resistance value difference to the second resistance value difference is greater than 1.2 times the first ratio.
